(19)

Europäisches
Patentamt
European
Patent Office
Office européen
des brevets

(11) **EP 4 548 991 A1**

(12) **EUROPEAN PATENT APPLICATION**

(43) Date of publication:
 **07.05.2025 Bulletin 2025/19**

(21) Application number: **24209424.1**

(22) Date of filing: **29.10.2024**

(51) International Patent Classification (IPC):
 *B01D 15/24* (2006.01)   *B01D 15/36* (2006.01)
 *C02F 1/42* (2023.01)   *C22B 3/42* (2006.01)
 *C22B 26/12* (2006.01)   *B01D 15/18* (2006.01)
 *C02F 1/28* (2023.01)   *C02F 103/00* (2006.01)
 *C02F 103/08* (2006.01)   *C22B 3/24* (2006.01)

(52) Cooperative Patent Classification (CPC):
 **C02F 1/42; B01D 15/1864; B01D 15/203;**
 **B01D 15/361; C22B 3/24; C22B 3/42; C22B 26/12;**
 B01D 15/22; C02F 1/281; C02F 2103/10

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(30) Priority: **30.10.2023 CN 202311421700**

(71) Applicant: **Sunresin New Materials Co. Ltd.**
 **Xi'an, Shaanxi 710075 (CN)**

(72) Inventors:
 • LIU, Heng
  Xi'an, 710075 (CN)
 • LIU, Qiong
  Xi'an, 710075 (CN)
 • LI, Suidang
  Xi'an, 710075 (CN)
 • KOU, Xiaokang
  Xi'an, 710075 (CN)

(74) Representative: **J A Kemp LLP**
 **80 Turnmill Street**
 **London EC1M 5QU (GB)**

(54) **METHOD FOR EXTRACTING LITHIUM FROM BRINE, AND APPLICATION**

(57)   Disclosed are a method for extracting lithium from brine, and an application. The method includes performing extraction on the brine through a continuous ion exchange process, where according to the continuous ion exchange process, in an adsorption section, adsorption is performed on the brine with an aluminum-based lithium adsorbent; in a water-pushing-material section, a resin column is washed with a solution; in a desorption section, desorption is performed with pure water, and a desorption solution is collected in segments; and in a material-pushing-water section, a solution in a resin column is replaced by spent brine. The solution used in the water-pushing-material section is a front-segment collected liquid in the desorption section, and the front-segment collected liquid satisfies the following parameter: $520 \ us*cm^{-1} < \mathscr{B} < 1860 \ us*cm^{-1}$, $\mathscr{B} = conductivity*(lithium concentration/total impurity concentration)$, a unit of the conductivity is $us*cm^{-1}$, a unit of the lithium concentration and a unit of the total impurity concentration are both mg/L, and the total impurity includes potassium, sodium, calcium, magnesium, and boron. Desorption assistance is realized after a water-pushing-material operation is performed with the front-segment collected liquid collected in segments in the desorption section. Therefore, efficiency of the adsorbent is improved, desorption water consumption is reduced, and a quality of a qualified solution is enhanced.

FIG. 1

EP 4 548 991 A1

# Description

## TECHNICAL FIELD

The disclosure relates to the technical field of brine extraction, and in particular to a method for extracting lithium from brine, and an application.

## BACKGROUND

With rapid development of the global new energy industry, the output and sales volume of new energy vehicles are gradually enhanced, and the demand for lithium carbonate is further increased. Lithium resources are currently regarded as core new resources, but are highly possible in short supply for a long time in the future because of continuous unbalance between demand and supply. Lithium resources from brine account for an increasing proportion of supply in the lithium industry. At present, it is primary practice to extract lithium from brine through an adsorption method and a membrane method.

According to the adsorption method for extracting lithium, natural or synthetic compounds are prepared to selectively adsorb lithium ions in brine. Then the lithium ions in an adsorbent are separated from impurities and associated ions after eluted with water or an eluent. Compared with other methods, the adsorption method is superior in economic efficiency and environmental friendliness, and has a simple process, a high reclamation rate, and desirable selectivity. However, at present, the adsorption method has a high impurity concentration in an desorption section. Owing to a low lithium adsorption capacity of an aluminum-based adsorbent, it is required to switch between brine and water rapidly at a high frequency in an adsorption and desorption cycle. During switch, impurities such as sodium, potassium, calcium, and magnesium are introduced into a qualified solution. In consequence, an adsorption effect is affected, resulting in low application efficiency of the adsorption method.

In view of the above, the disclosure is provided.

## SUMMARY OF THE INVENTION

An objective of the disclosure is to provide a method for extracting lithium from brine, and an application, so as to relieve the above technical problems.

The disclosure is implemented as follows:

In a first aspect, the disclosure provides a method for extracting lithium from brine. The method includes performing extraction on the brine through a continuous ion exchange process, where the continuous ion exchange process includes an adsorption section, a water-pushing-material section, a desorption section, and a material-pushing-water section; in the adsorption section, adsorption is performed on the brine with an aluminum-based lithium adsorbent; in the water-pushing-material section, a resin column is washed with water; in the desorption section, the aluminum-based lithium adsorbent is desorbed with pure water, and a desorption solution is collected in segments; and in the material-pushing-water section, water in a resin column is replaced by spent brine; and

the water used in the water-pushing-material section is a front-segment collected liquid in the desorption section, and the front-segment collected liquid satisfies the following parameter: 520

$$520 \ us*cm^{-1} < \mathscr{B} < 1860 \ us*cm^{-1},$$ where

$\mathscr{B}$ =conductivity*(lithium concentration/total impurity concentration), a unit of the conductivity is us*cm$^{-1}$, a unit of the lithium concentration is mg/L, a unit of the total impurity concentration is mg/L, and the total impurity includes five ions of potassium, sodium, calcium, magnesium, and boron.

In a second aspect, the disclosure further provides an application of the above method for extracting lithium from brine in extracting lithium from a salt lake.

The disclosure has the beneficial effects as follows: desorption assistance is realized, and a quality of the desorption solution is enhanced after the desorption solution in the desorption section is collected in segments, and a water-pushing-material operation is performed with the front-segment collected liquid satisfying specific parameter requirements and having a high impurity content. Therefore, use efficiency of the adsorbent per unit time is greatly improved, desorption water consumption is reduced, and a quality of a qualified solution is enhanced.

## BRIEF DESCRIPTION OF THE DRAWINGS

In order to describe the technical solutions in examples the disclosure more clearly, a brief description of the accompanying drawings required for describing the examples will be provided below. It should be understood that the following accompanying drawings show merely some examples of the disclosure, and therefore should not be deemed as limiting the scope. Those of ordinary skill in the art can also derive other accompanying drawings from these accompanying drawings without creative efforts.

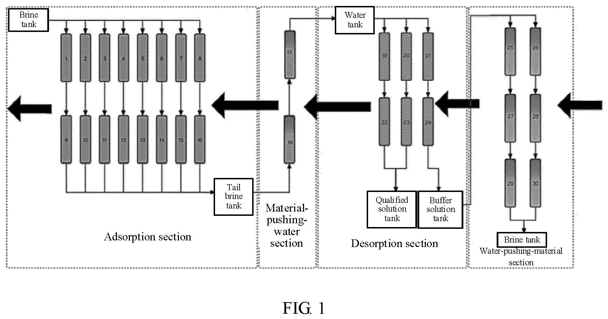

FIG 1 is a schematic flowchart of a continuous ion exchange process in a method for extracting lithium from brine according to an embodiment of the disclosure.

## DETAILED DESCRIPTION

In order to make the objectives, technical solutions, and advantages in examples of the disclosure clearer, the technical solutions in the examples of the disclosure will be clearly and completely described below. The examples are performed according to conventional conditions or conditions recommended by a manufacturer if specific conditions are not indicated. Reagents or instruments used are conventional products commercially available if the manufacturer is not indicated.

A method for extracting lithium from brine, and an application provided by the disclosure are specifically described below.

With reference to FIG 1, a method for extracting lithium from brine is provided in some configurations of the disclosure. The method includes: extraction is performed on the brine through a continuous ion exchange process, where the continuous ion exchange process includes an adsorption section, a water-pushing-material section, a desorption section, and a material-pushing-water section.

Specifically, each section operates on the basis of resin columns. The resin columns are filled with adsorbents. In some configurations, 12-50 resin columns are used in the continuous ion exchange process in total, 5-22 resin columns are used in the adsorption section, 3-12 resin columns are used in the water-pushing-material section, 3-12 resin columns are used in the desorption section, 1-4 resin columns are used in the material-pushing-water section, and the resin columns in each section are connected in series and in parallel.

Illustratively, with reference to FIG 1, 16 resin columns are used in the adsorption section, 2 resin columns are connected in series as a group, and 8 groups of resin columns connected in series are connected in parallel. 6 resin columns are used in the water-pushing-material section, 3 resin columns are connected in series as a group, and 2 groups of resin columns are connected in parallel. 6 resin columns are used in the desorption section, 2 resin columns are connected in series as a group, and 3 groups of resin columns are connected in parallel. 2 resin columns are used in the material-pushing-water section, and 2 resin columns are connected in series.

Further, in order to reach desirable adsorption and desorption effects, in some configurations, each resin column used in the continuous ion exchange process has a height-diameter ratio of 0.7-2.5. For example, the height-diameter ratio is 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, etc.

In the adsorption section, adsorption is performed on the brine with an aluminum-based lithium adsorbent. In other words, as shown in FIG 1, a bottom of each column is filled with 1 cm to 20 cm of filler such as quartz sand, a middle of each column is filled with an aluminum-based lithium adsorbent, and a top of each column is filled with 1 cm to 20 cm of filler such as polypropylene (PP) balls. The brine is divided into eight branches from a brine tank, and enters 8 resin columns connected in series in a pair for adsorption. Liquids obtained after adsorption are gathered into a spent brine tank. The aluminum-based lithium adsorbent is an aluminum-based lithium adsorbent having a structure of $Li_xAl_yO_z$, where x is in a range from 0.5 to 8, y is in a range from 0.5 to 6, and z is in a range from 0.5 to 12. For example, an aluminum-based lithium adsorbent having a structure of $LiAlSO_s$, $Li_3Al_5O_9$, or $Li_2Al_4O_7$ may be specifically selected. Lithium can be selectively adsorbed efficiently by selecting the aluminum-based lithium adsorbent having the above structure. Moreover, only desorption is performed with pure water, so that the difficulty of desorption is reduced.

In the water-pushing-material section, the resin columns are washed with water. In the desorption section, the aluminum-based lithium adsorbent is desorbed with the pure water, and a desorption solution is collected in segments.

It should be noted that segmented collection in the desorption section is to divide the desorption solution into a front-segment desorption solution and a rear-segment desorption solution. The front-segment desorption solution is a solution having a high impurity content. The solution having a high impurity content may be stored in a buffer solution tank as a buffer solution, and then transported to the water-pushing-material section for washing the resin columns in the water-pushing-material section.

In order to reach a desirable desorption assistance effect, in some configurations, the front-segment desorption solution used in the water-pushing-material section has a usage amount in a range from 0.5 bed volume (BV) to 4 BV per switch. For example, the usage amount is 0.5 BV, 0.6 BV, 0.8 BV, 1.0 BV, 1.2 BV, 1.4 BV, 1.5 BV, 1.8 BV, 2.0 BV, 2.2 BV, 2.5 BV, 2.8 BV, 3.0 BV, 3.2 BV, 3.5 BV, 3.8 BV, 4.0 BV, etc.

The water used in the water-pushing-material section is the front-segment collected liquid in the desorption section, and the front-segment collected liquid satisfies the following parameter: $520 \text{ us*cm}^{-1} < \mathscr{B} < 1860 \text{ us*cm}^{-1}$, where $\mathscr{B} = \text{conductivity} * (\text{lithium concentration/total impurity concentration})$, a unit of the conductivity is $us*cm^{-1}$, a unit of the lithium concentration is mg/L, a unit of the total impurity concentration is mg/L, and the total impurity includes five ions of potassium, sodium, calcium, magnesium, and boron. Only the front-segment collected liquid satisfying the above parameter range can exert the desirable desorption assistance effect.

Further, the above segmentation method for collecting the desorption solution in segments indicates segmenting according to resin columns, segmenting according to change of conductivity, segmenting according to time, segmenting according to lithium concentration, or segmenting according to impurity concentration.

Specifically, segmenting according to resin columns is to divide the resin columns into a plurality of resin columns connected in series or in parallel for collection. For example, in FIG 1, two resin columns are divided to be connected in series, and desorption solutions obtained after desorption by means of the two resin columns are stored in a buffer solution tank as buffer solutions, and further transported to the water-pushing-material section for performing a water-pushing-material operation. In the segmentation method, the front-segment desorption solution and the rear-segment desorption solution may be collected simultaneously. Moreover, a number of resin columns corresponding to the rear-segment desorption solution is greater than that of resin columns corresponding to the front-segment desorption solution.

Segmenting according to change of conductivity is to select any point from 5000 us/cm to 100000 us/cm as a conductivity switch point for segmenting. For example, conductivity of 10,000 us/cm is selected as a switch point between front-segment collection and rear-segment collection. Segmenting according to time is to select any time node from 10% to 90% of total time of each section in the continuous ion exchange process as a time node for segmenting. For example, a time point of 30% is selected as the time node for segmenting. Segmenting according to lithium concentration is to select any lithium concentration from 100 mg/L to 2,000 mg/L as a switch point for segmenting. For example, a lithium concentration of 500 mg/L is selected as the switch point. Segmenting according to impurity concentration is to select any total impurity concentration from 5 g/L to 100g/L as a switch point for segmenting. For example, a total impurity concentration of 20 g/L is selected as the switch point for segmenting.

It should be noted that all the resin columns in the desorption section are combined in a form of being connected in series and in parallel in a case of segmenting according to change of conductivity, segmenting according to time, segmenting according to lithium concentration, or segmenting according to impurity concentration. The desorption solutions from all the resin columns are collected concentratedly after gathered, and divided into the front-segment collected liquid and the rear-segment collected liquid according to the switch point for segmenting.

In the material-pushing-water section, water in the resin columns are replaced by spent brine. The spent brine mentioned in the disclosure means a liquid obtained after the resin columns in the adsorption section perform the adsorption on the brine. For example, with reference to FIG 1, a liquid obtained after brine having most lithium removed through adsorption by means of the 16 resin columns is gathered serves as the spent brine. The spent brine is transported to a spent brine tank for storage, and then transported to the material-pushing-water section for replacing the water in the resin columns.

In some configurations, the configurations of the disclosure may be more suitable for brine having a high total impurity content, such as brine having a total impurity content greater than 150 g/L.

Specifically, brine having the following specific compositions has a desirable treatment effect. In the brine to be treated, the lithium concentration is in a range from 300 ppm to 600 ppm, a potassium concentration is in a range from 1000 ppm to 7,000 ppm, a sodium concentration is in a range from 15,000 ppm to 40,000 ppm, a boron concentration is in a range from 100 ppm to 1,400 ppm, a calcium concentration is in a range from 3,400 ppm to 15,000 ppm, and a magnesium concentration is in a range from 35,000 ppm to 60,000 ppm.

An application of the above method for extracting lithium from brine in extracting lithium from a salt lake is further provided in some examples of the disclosure.

A novel application process for extracting lithium from brine is provided in the above configurations of the disclosure. Therefore, use efficiency of an adsorbent can be improved, desorption water consumption can be reduced, and a quality of a qualified solution can be enhanced. Compared with the prior art, a continuous ion exchange technology is used in the configurations of the disclosure. With the technology, adsorption and desorption flows can be optimized, so that the use efficiency of the adsorbent per unit time is greatly improved. Moreover, further optimization is performed on the basis of the continuous ion exchange technology, and the desorption solution is collected in segments in the desorption section. Accordingly, the quality of the qualified solution obtained through continuous ion exchange is enhanced through the segmented collection and separated utilization.

Features and performance of the disclosure are further described in detail below in conjunction with the examples.

According to the continuous ion exchange process in the following examples and comparative examples, the resin columns have the height-diameter ratio of 1.2, and the adsorbent is the aluminum-based lithium adsorbent having a structure of LiAlsOs.

Example 1

A method for extracting lithium from brine is provided in the example. The method specifically includes: extraction is performed on the brine through a continuous ion exchange process. With reference to FIG 1, the continuous ion exchange process in the example also includes an adsorption section, a water-pushing-material section, a desorption section, and a material-pushing-water section.

The differences from the continuous ion exchange process in FIG 1 lie in that 12 resin columns are used in the adsorption section, 2 resin columns are connected in series as a group, 6 groups of resin columns connected in series are connected in parallel, and brine obtained after adsorption is gathered in the spent brine tank, and transported to the material-pushing-water section for washing the resin columns; 3 resin columns connected in series are used in the water-pushing-material section; 6 resin columns are used in the desorption section, 2 resin columns are connected in series as a group, one group is configured to collect a high-impurity buffer solution, the other two groups are connected in parallel to collect a qualified solution, and the high-impurity buffer solution collected is stored in a buffer solution tank, and then further transported to the water-pushing-material section for washing the resin columns; and 2 resin columns connected in series are configured for a material-pushing-water operation.

In the adsorption section, the brine has a usage amount of 6.9 BV per switch; in the water-pushing-material section, the high-impurity buffer solution has a usage amount of 1.2 BV per switch; in the desorption section, pure water has a usage amount of 2.4 BV per switch; and in the material-pushing-water section, spent brine has a usage amount of 0.9 BV per switch.

The brine treated in the adsorption section has main elemental components of lithium at 324 ppm, potassium at 4,256 ppm, sodium at 34,221 ppm, boron at 1,358 ppm, calcium at 3,421 ppm, and magnesium at 56,901 ppm; and desorption water is deionized water having total dissolved solids (TDS)<100. The high-impurity buffer solution obtained in the desorption section has compositions of lithium at 543 ppm, potassium at 372 ppm, sodium at 3,381 ppm, boron at 398 ppm, calcium at 311 ppm, and magnesium at 11,033 ppm. Specifically,

$$\mathscr{B}=838.9$$.

A qualified solution obtained through treatment on the basis of the above continuous ion exchange process has components of lithium at 672 ppm, potassium at 181 ppm, sodium at 788 ppm, boron at 161 ppm, calcium at 232 ppm, and magnesium at 897 ppm. A ratio of a total impurity concentration to a lithium concentration is 3.36 : 1, and a high-quality qualified solution is obtained.

Example 2

A method for extracting lithium from brine is provided in the example. The method specifically includes: extraction is performed on the brine through a continuous ion exchange process. With reference to FIG 1, the continuous ion exchange process in the example also includes an adsorption section, a water-pushing-material section, a desorption section, and a material-pushing-water section.

The differences from the continuous ion exchange process in FIG 1 lie in that 14 resin columns are used in the adsorption section, 2 resin columns are connected in series as a group, 7 groups of resin columns connected in series are connected in parallel, and brine obtained after adsorption is gathered in the spent brine tank, and transported to the material-pushing-water section for washing the resin columns; 3 resin columns connected in series are used in the water-pushing-material section; 6 resin columns are used in the desorption section, 2 resin columns are connected in series as a group, 3 groups of resin columns connected in series are connected in parallel, and water treated by 3 groups of resin columns connected in parallel are gathered, where a desorption solution collected in first four minutes is transported to the water-pushing-material section as a high-impurity buffer solution for washing the resin columns, and a desorption solution collected after the four minutes is transported to a qualified solution tank for storage as a qualified solution; and 2 resin columns connected in series are configured for a material-pushing-water operation.

In the adsorption section, the brine has a usage amount of 5.8 BV per switch; in the water-pushing-material section, the high-impurity buffer solution has a usage amount of 1.2 BV per switch; in the desorption section, pure water has a usage amount of 2.2 BV per switch; and in the material-pushing-water section, spent brine has a usage amount of 0.9 BV per switch.

The brine treated in the adsorption section has main elemental components of lithium at 441 ppm, potassium at 6,725 ppm, sodium at 15,201 ppm, boron at 889 ppm, calcium at 8,972 ppm, and magnesium at 36,081 ppm; and desorption water is deionized water having TDS<100. The high-impurity buffer solution obtained in the desorption section has compositions of lithium at 351 ppm, potassium at 1,029 ppm, sodium at 3,031 ppm, boron at 502 ppm, calcium at 1,593 ppm, and magnesium at 12,489 ppm. Specifically,

$$\mathscr{B}=1,371.6$$.

The qualified solution obtained through treatment on the basis of the above continuous ion exchange process has components of lithium at 762 ppm, potassium at 245 ppm, sodium at 331 ppm, boron at 167 ppm, calcium at 239 ppm, and magnesium at 891 ppm. A ratio of a total impurity concentration to a lithium concentration is 2.46 : 1, and a high-quality qualified solution is obtained.

Example 3

A method for extracting lithium from brine is provided in the example. The method specifically includes: extraction is performed on the brine through a continuous ion exchange process. With reference to FIG 1, the continuous ion exchange process in the example also includes an adsorption section, a water-pushing-material section, a desorption section, and a material-pushing-water section.

The differences from the continuous ion exchange process in FIG 1 lie in that 16 resin columns are used in the adsorption section, 2 resin columns are connected in series as a group, 8 groups of resin columns connected in series are connected in parallel, and brine obtained after adsorption is gathered in the spent brine tank, and transported to the material-pushing-water section for washing the resin columns; 3 resin columns connected in series are used in the water-pushing-material section; 4 resin columns are used in the desorption section, 2 resin columns are connected in series as a group, 2 groups of resin columns connected in series are connected in parallel, and water treated by 2 groups of resin columns connected in parallel are gathered, where a desorption solution collected at conductivity less than 46000 us/cm is transported to the water-pushing-material section as a high-impurity buffer solution for washing the resin columns, and a desorption solution collected at conductivity greater than or equal to 46,000 us/cm is transported to the qualified solution tank for storage as a qualified solution; and 2 resin columns connected in series are configured for a material-pushing-water operation.

In the adsorption section, the brine has a usage amount of 4.4 BV per switch; in the water-pushing-material section, the high-impurity buffer solution has a usage amount of 1.2 BV per switch; in the desorption section, pure water has a usage amount of 2.5 BV per switch; and in the material-pushing-water section, spent brine has a usage amount of 0.9 BV per switch.

The brine treated in the adsorption section has main elemental components of lithium at 569 ppm, potassium at 1,031 ppm, sodium at 37,822 ppm, boron at 114 ppm, calcium at 14,281 ppm, and magnesium at 45,012 ppm; and desorption water is deionized water having TDS<100. The high-impurity buffer solution obtained in the desorption section has compositions of lithium at 451 ppm, potassium at 2,109 ppm, sodium at 5,019 ppm, boron at 55 ppm, calcium at 2,103 ppm, and magnesium at 10,311 ppm. Specifically,

$$\mathscr{B}=1{,}703.2$$

The qualified solution obtained through treatment on the basis of the above continuous ion exchange process has components of lithium at 1,092 ppm, potassium at 342 ppm, sodium at 451 ppm, boron at 17 ppm, calcium at 671 ppm, and magnesium at 1,029 ppm. A ratio of a total impurity concentration to a lithium concentration is 2.30: 1, and a high-quality qualified solution is obtained.

Comparative Example 1

A method for extracting lithium from brine is provided in the comparative example. The method specifically includes: extraction is performed on the brine through a continuous ion exchange process. With reference to FIG 1, the continuous ion exchange process in the comparative example also includes an adsorption section, a water-pushing-material section, a desorption section, and a material-pushing-water section.

The differences from the continuous ion exchange process in FIG 1 lie in that 12 resin columns are used in the adsorption section, 2 resin columns are connected in series as a group, 6 groups of resin columns connected in series are connected in parallel, and brine obtained after adsorption is gathered in the spent brine tank, and transported to the material-pushing-water section for washing the resin columns; 3 resin columns connected in series are used in the water-pushing-material section; 6 resin columns are used in the desorption section, 2 resin columns are connected in series as a group, 3 groups of resin columns connected in series are connected in parallel, and water treated by 3 groups of resin columns connected in parallel are gathered, and transported to the qualified solution tank for storage as a qualified solution; and 2 resin columns connected in series are configured for a material-pushing-water operation.

In the adsorption section, the brine has a usage amount of 6.9 BV per switch; in the water-pushing-material section, pure water used has a usage amount of 1.2 BV per switch; in the desorption section, pure water has a usage amount of 2.4 BV per switch; and in the material-pushing-water section, spent brine has a usage amount of 0.9 BV per switch.

The brine treated in the adsorption section has main elemental components of lithium at 324 ppm, potassium at 4,256 ppm, sodium at 34,221 ppm, boron at 1,358 ppm, calcium at 3,421 ppm, and magnesium at 56,901 ppm; and desorption water is deionized water having TDS<100.

The qualified solution obtained through treatment on the basis of the above continuous ion exchange process has components of lithium at 491 ppm, potassium at 492 ppm, sodium at 2,019 ppm, boron at 451 ppm, calcium at 921 ppm, and magnesium at 3,975 ppm. A ratio of a total impurity concentration to a lithium concentration is 16.01:1, and a low-quality qualified solution is obtained.

Comparative Example 2

A method for extracting lithium from brine is provided in the example. The method specifically includes: extraction is performed on the brine through a continuous ion exchange process. With reference to FIG 1, the continuous ion exchange process in the example also includes an adsorption section, a water-pushing-material section, an desorption section, and a material-pushing-water section.

The differences from the continuous ion exchange process in FIG 1 lie in that 14 resin columns are used in the adsorption section, 2 resin columns are connected in series as a group, 7 groups of resin columns connected in series are connected in parallel, and brine obtained after adsorption is gathered in the spent brine tank, and transported to the material-pushing-water section for washing the resin columns; 3 resin columns connected in series are used in the water-pushing-material section; 6 resin columns are used in the desorption section, 2 resin columns are connected in series as a group, 3 groups of resin columns connected in series are connected in parallel, and water treated by 3 groups of resin columns connected in parallel are gathered, where a desorption solution collected in first four minutes is transported to the water-pushing-material section as a high-impurity buffer solution for washing the resin columns, and a desorption solution collected after the four minutes is transported to a qualified solution tank for storage as a qualified solution; and 2 resin columns connected in series are configured for a material-pushing-water operation.

In the adsorption section, the brine has a usage amount of 6.9 BV per switch; in the water-pushing-material section, the high-impurity buffer solution has a usage amount of 2.1 BV per switch; in the desorption section, pure water has a usage amount of 3.6 BV per switch; and in the material-pushing-water section, spent brine has a usage amount of 0.9 BV per switch.

The brine treated in the adsorption section has main elemental components of lithium at 441 ppm, potassium at 6,725 ppm, sodium at 15,201 ppm, boron at 889 ppm, calcium at 8,972 ppm, and magnesium at 36,081 ppm; and desorption water is deionized water having TDS<100. The high-impurity buffer solution obtained in the desorption section has compositions of lithium at 326 ppm, potassium at 3,425 ppm, sodium at 9,821 ppm, boron at 651 ppm, calcium at 6,522 ppm, and magnesium at 23,106 ppm. Specifically, $\mathscr{B}=374.5$.

The qualified solution obtained through treatment on the basis of the above continuous ion exchange process has components of lithium at 428 ppm, potassium at 981 ppm, sodium at 1,139 ppm, boron at 320 ppm, calcium at 1,290 ppm, and magnesium at 2,391 ppm. A ratio of a total impurity concentration to a lithium concentration is 14.3:1, and a low-quality qualified solution is obtained.

In conclusion, in order to reduce an impurity content of the qualified solution, the method for collecting the desorption solution in segments is developed in the embodiment of the disclosure, and the desorption assistance is realized by washing brine at a front end with the front-segment solution obtained through the segmented collection. Accordingly, the impurities in the product are reduced. Therefore, the method optimizes the adsorption and desorption flows, so that the use efficiency of the adsorbent per unit time is greatly improved, the desorption water consumption is reduced, and the quality of the qualified solution is enhanced.

What are described above are merely the preferred examples of the disclosure, but are not intended to limit the disclosure. Those skilled in the art can make various modifications and variations to the disclosure. Any modifications, equivalent replacements, improvements, etc. made within the spirit and principles of the disclosure should fall within the scope of protection of the disclosure.

**Claims**

1. A method for extracting lithium from brine, comprising performing extraction on the brine through a continuous ion exchange process, wherein the continuous ion exchange process comprises an adsorption section, a water-pushing-material section, a desorption section, and a material-pushing-water section;

   in the adsorption section, adsorption is performed on the brine with an aluminum-based lithium adsorbent; in the water-pushing-material section, a resin column is washed with water; in the desorption section, the aluminum-based lithium adsorbent is desorbed with pure water, and a desorption solution is collected in segments; and in the material-pushing-water section, water in the resin column is replaced by spent brine; and
   the water used in the water-pushing-material section is a front-segment collected liquid in the desorption section, and the front-segment collected liquid satisfies the following parameter:

   $$\text{us*cm}^{-1} < \mathscr{B} < 1860 \ \text{us*cm}^{-1},$$

   wherein $\mathscr{B}$ =conductivity*(lithium concentration/total impurity concentration), a unit of the conductivity is us*cm$^{-1}$, a unit of the lithium concentration is mg/L, a unit of the total impurity concentration is mg/L, and the total impurity comprises five ions of potassium, sodium, calcium, magnesium, and boron.

2. The method for extracting lithium from brine according to claim 1, wherein the resin column used in the continuous ion exchange process has a height-diameter ratio of 0.7-2.5.

3. The method for extracting lithium from brine according to claim 1, wherein 12-50 resin columns are used in the continuous ion exchange process in total, 5-22 resin columns are used in the adsorption section, 3-12 resin columns are used in the water-pushing-material section, 3-12 resin columns are used in the desorption section, 1-4 resin columns are used in the material-pushing-water section, and the resin columns in each section are connected in series and in parallel.

4. The method for extracting lithium from brine according to claim 3, wherein the aluminum-based lithium adsorbent is an aluminum-based lithium adsorbent having a structure of Li$_x$Al$_y$O$_z$, wherein x is in a range from 0.5 to 8, y is in a range from 0.5 to 6, and z is in a range from 0.5 to 12.

5. The method for extracting lithium from brine according to any one of claims 1-4, wherein the front-segment collected liquid used in the water-pushing-material section has a usage amount of 0.5 bed volume (BV) to 4 BV per switch.

6. The method for extracting lithium from brine according to any one of claims 1-4, wherein a segmentation method for collecting the desorption solution in segments indicates segmenting according to resin columns, segmenting according to change of conductivity, segmenting according to time, segmenting according to lithium concentration, or segmenting according to impurity concentration.

7. The method for extracting lithium from brine according to claim 6, wherein segmenting according to resin columns is to divide the resin columns into a plurality of resin columns connected in series or in parallel for collection; segmenting according to change of conductivity is to select any point from 5,000 us/cm to 100,000 us/cm as a conductivity switch point for segmenting; segmenting according to time is to select any time node from 10% to 90% of total time of each section in the continuous ion exchange process as a time node for segmenting; segmenting according to lithium concentration is to select any lithium concentration from 100 mg/L to 2,000 mg/L as a switch point for segmenting; and segmenting according to impurity concentration is to select any total impurity concentration from 5 g/L to 100g/L as a switch point for segmenting.

8. The method for extracting lithium from brine according to any one of claims 1-4, wherein the total impurity in the brine has a content greater than 150 g/L.

9. The method for extracting lithium from brine according to any one of claims 1-4, wherein in the brine, the lithium concentration is in a range from 50 ppm to 4,000 ppm, a potassium concentration is in a range from 500 ppm to 15,000 ppm, a sodium concentration is in a range from 5,000 ppm to 60,000 ppm, a boron concentration is in a range from 50 ppm to 5,000 ppm, a calcium concentration is in a range from 500 ppm to 40,000 ppm, and a magnesium concentration is in a range from 1,000 ppm to 80,000 ppm.

10. An application of the method for extracting lithium from brine according to any one of claims 1-9 in extracting lithium from a salt lake.

FIG. 1

**EP 4 548 991 A1**

Europäisches
Patentamt
European
Patent Office
Office européen
des brevets

# EUROPEAN SEARCH REPORT

Application Number

EP 24 20 9424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/124792 A1 (BYD CO LTD [CN]) 6 July 2023 (2023-07-06) * figure 1 * * example 1; page 8 * | 1-10 | INV. B01D15/24 B01D15/36 C02F1/42 C22B3/42 C22B26/12 ADD. B01D15/18 C02F1/28 C02F103/00 C02F103/08 C22B3/24 |

TECHNICAL FIELDS
SEARCHED    (IPC)

B01D
B01J
C02F
C22B

The present search report has been drawn up for all claims

| Place of search | Date of completion of the search | Examiner |
|---|---|---|
| The Hague | 13 March 2025 | Selmeci, Áron |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9424

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | Publication date | Patent family member(s) | | Publication date |
|---|---|---|---|---|
| WO 2023124792 A1 | 06-07-2023 | AR | 128132 A1 | 27-03-2024 |
| | | AU | 2022428473 A1 | 18-04-2024 |
| | | CA | 3233544 A1 | 06-07-2023 |
| | | CL | 2024001276 A1 | 23-09-2024 |
| | | CN | 116356144 A | 30-06-2023 |
| | | EP | 4394063 A1 | 03-07-2024 |
| | | US | 2023203619 A1 | 29-06-2023 |
| | | WO | 2023124792 A1 | 06-07-2023 |

EPO FORM P0459

For more details about this annex : see Official Journal of the European Patent Office, No. 12/82